# EUROPÄISCHE PATENTSCHRIFT

(11) **EP 1 371 880 B1**
(45) Veröffentlichungstag und Bekanntmachung des Hinweises auf die Patenterteilung: **27.02.2008**
(21) Anmeldenummer: 03006404.2
(22) Anmeldetag: 21.03.2003
(51) Int. Cl.: F16H 59/02, F16H 63/14

(54) **Steuereinheit für ein Getriebe eines Kraftfahrzeugs und Schaltwählhebel**
A control unit of a vehicle transmission and shift lever device
Dispositif de commande de boite de vitesses de véhicule et levier de passage de vitesses

(30) Priorität: 14.06.2002 DE 10226480
(43) Veröffentlichungstag der Anmeldung: 17.12.2003
(73) Patentinhaber: AUDI AG, 85045 Ingolstadt (DE)
(72) Erfinder: Kischkat, Ralf, 85057 Ingoldstadt (DE)

(56) Entgegenhaltungen:
- DE-A1- 19 620 532
- DE-C1- 3 109 182
- US-A- 5 967 252
- US-A1- 2001 004 851

## Beschreibung

Die vorliegende Erfindung betrifft eine Steuereinheit für ein Getriebe eines Kraftfahrzeugs und einen Schalt-Wählhebel.

Zur Übertragung eines Fahrerwunsches an ein Getriebe eines Fahrzeugs wird in der Regel ein Schalt-Wählhebel verwendet, der mit einer Übertragungsvorrichtung mechanisch gekoppelt ist und über diese den Fahrerwunsch an das Getriebe übermittelt. Dies gilt sowohl für sogenannte Automatik-Getriebe als auch für Standard-Schaltgetriebe eines Fahrzeugs. Als Fahrerwunsch wird die Wahl der Getriebeposition durch den Fahrer, d.h. der Schaltbefehl, bezeichnet. Die Übertragung von der Übertragungsvorrichtung zu dem Getriebe kann über mechanische Mittel, wie beispielsweise einen Seilzug oder aber über elektrische Verbindungen erfolgen. Im letzteren Fall, der im folgenden auch als Shift-by-Wire bezeichnet wird, müssen die mechanischen Signale, die durch die Bewegung des Schalt-Wählhebels erzeugt werden, in elektrische Signale umgewandelt werden.

Als Schalthebel können sogenannte rastierende Schalthebel verwendet werden. Diese werden von dem Fahrer in eine Position gebracht und verbleiben in dieser Position bis der Fahrer den Schalthebel in eine andere Position bewegt. Diese Schalthebel werden sowohl bei Automatik als auch bei Standardgetrieben verwendet und können sowohl für die mechanische als auch die elektronische Übertragung zu dem Getriebe eingesetzt werden. Insbesondere bei Automatikgetrieben mit mechanischer Übertragung des Fahrerwunsches werden heutzutage rastierende Wählhebel verwendet. Ist der Wählhebel nicht mit einem Schaltsack versehen, so kann an der Stellung des Wählhebels die Getriebeposition angezeigt werden.

Bei Fahrzeugen mit Shift-By-Wire-Übertragung werden in der Regel nicht rastierende Wählhebel eingesetzt. Hierdurch wird vermieden, dass Wählhebel- und Getriebeposition voneinander abweichen, was durch eine Schaltverzögerung oder diverse Fehler verursacht sein kann. In diesem Fall würde sich der Fahrer in der trügerischen Sicherheit wiegen, das Getriebe befände sich in der gewünschten Position. Außerdem erlaubt die Shift-by-Wire-Betätigung diverse Sonderfunktionen, bei denen die Getriebeposition ohne Fahrereingriff geändert wird (beispielsweise die Funktion "Auto-P": beim Abstellen des Motors wird das Getriebe automatisch in Position "P" gebracht).

Nachteil der Shift-by-Wire-Schaltung ist, dass diese mit hohen Kosten verbunden ist und somit das Fahrzeug in der Herstellung verteuert. Weiterhin kann die elektrische Übertragung nicht als ähnlich sicher wie die mechanische betrachtet werden. Bordnetzausfälle, elektrische Fehler und die größere Anzahl beteiligter Elemente und deren höhere Ausfallraten machen zusätzliche Absicherungen erforderlich. Zudem erfolgt die Übertragung in der Regel mehrkanalig und es werden daher zusätzliche Überwachungsfunktionen und -komponenten benötigt. Dennoch ist die Ausfallwahrscheinlichkeit höher als bei einer mechanischen Übertragung. Damit entstehen Probleme hinsichtlich der Sicherheit und Zuverlässigkeit.

Nachteilig an der mechanischen Übertragung, bei der rastierende Schalthebel verwendet werden, ist, dass Änderungen an der Getriebeposition ohne Fahrerwunsch gleichzeitig zu einer Änderung der Wählhebelposition führen. Dies kann zu Verletzungen von Fahrer und Beifahrer führen.

Aus der US 2001/0004851 sind eine Steuereinheit und in Schalt-Wählhebel bekannt, die die Merkmale des Oberbegriffes der Ansprüche 1 und 8 offenbaren.

Aus der DE 196 20 532 A1 ist eine Schaltvorrichtung für ein Automatikgetriebe mit einem zweiteiligen Schalthebel, einem Koppelglied und eine Verbindung zum Getriebe bekannt. Darüber hinaus umfasst die Schaltvorrichtung eine Kolbenstange zum Einkoppeln und Entkoppeln des Schalthebels mit dem Koppelglied.

Aufgabe der vorliegenden Erfindung ist es, eine Steuereinheit zu schaffen, die die Vorteile eines Shift-by-Wire-Systems erzielen kann, ohne dass ein hoher elektrischer Aufwand notwendig ist. Zusätzlich soll die Steuerungseinheit leicht herzustellen und in ein Fahrzeug zu integrieren sein und eine hohe Sicherheit für Fahrer und Beifahrer liefern. Insbesondere soll bei einer Getriebepositionsänderung ohne Fahrereinwirkung eine hohe Sicherheit betreffend die Entkopplung des Wählhebels mit einer Eingriffsvorrichtung gegeben sein.

Der Erfindung liegt die Erkenntnis zugrunde, dass diese Aufgabe durch eine Steuerungseinheit geschaffen werden kann, die eine mechanische Übertragung der Fahrerwünsche an das Getriebe aufweist und bei der der Schalt-Wählhebel von der Getriebeposition entkoppelt werden kann.

Die Aufgabe wird nach einem ersten Aspekt der Erfindung daher durch eine Steuereinheit für ein Getriebe eines Kraftfahrzeugs gelöst, die die Merkmale des Anspruchs 1 beinhaltet.

Durch diese Ausgestaltung der Steuereinheit ist es daher möglich, den Schalt-Wählhebel wahlweise mechanisch mit der Eingriffsvorrichtung in Eingriff zu bringen oder von dieser mechanisch zu entkoppeln. Somit kann zum einen durch die Bewegung des Schalt-Wählhebels mittels der Einkopplungsvorrichtung über die Eingriffs- und Übertragungsvorrichtung die Getriebeposition geändert werden. Andererseits kann aber - falls gewünscht - der Schaltwahlhebel bewegt werden, ohne dadurch die Getriebeposition zu verändern, und es ist möglich, die Getriebeposition zu verändern, ohne, dass der Schaltwahlhebel bewegt wird. Die Übertragung des Fahrerwunsches erfolgt erfindungsgemäß mechanisch, das bedeutet, dass der auf den Wählhebel übertragene Fahrerwunsch mittels mechanischer Vorrichtungen zum Getriebe übertragen wird, wo dann beispielsweise eine Welle bewegt wird, die im Getriebeinneren die Hydraulik entsprechend des Fahrerwunsches schaltet. Die mechanische Übertragung weist den Vorteil auf, dass komplexe elektronische Systeme und Elemente, wie diese beim Shift-by-Wire-System, bei dem der Fahrerwunsch ausschließlich elektrisch zum Getriebe übertragen wird, notwendig sind, entfallen können und dadurch die Sicherheit der Übertragung gesteigert wird.

Die Steuereinheit weist zusätzlich mindestens eine Sicherungsvorrichtung auf, die bei der Betätigung des Schaltwählhebels einen Eingriff der Einkopplungsvorrichtung mit der Eingriffsvorrichtung verhindern kann. Durch diese Sicherungsvorrichtung kann sichergestellt werden, dass trotz der Betätigung des Schalt-Wählhebels durch den Fahrer der Wählhebel mechanisch von der Eingriffsvorrichtung entkoppelt ist, während die Getriebeposition ohne Fahrereinwirkung geändert wird. Die Sicherungsvorrichtung wird vorzugsweise daher immer dann aktiviert, wenn die Getriebeposition ohne Fahrereingriff geändert wird.

Vorzugsweise stellt der Schalt-Wählhebel einen nicht rastierenden Hebel dar. Als nicht rastierender Hebel wird ein Schalt-Wählhebel bezeichnet, der sich, nachdem er durch den Fahrer in eine Position gebracht wurde und nachdem der Fahrer den Hebel loslässt, selbsttätig wieder in eine Ausgangsposition bewegt. Durch einen solchen Hebel kann eine zusätzliche Aktorik, die bei einem rastierenden Wählhebel notwendig wäre, um dessen Position wieder mit der Position des Getriebes in Einklang zu bringen, eingespart werden, ohne zu riskieren, dass dem Fahrer mittels der Hebelstellung eine Position angezeigt wird, die der tatsächlichen Getriebeposition nicht entspricht. Für die selbsttätige Bewegung des Schalt-Wählhebels in die Ausgangsposition ist vorzugsweise zumindest eine Rückstellvorrichtung vorgesehen. Mittels dieser Rückstellvorrichtung kann der Schalt-Wählhebel aus jeder Position, in die er durch den Fahrer gebracht wird, zurück in die Ausgangsposition gebracht werden. Die Rückstellvorrichtung kann beispielsweise durch Feder- oder Zylindersysteme realisiert werden.

Besonders bevorzugt ist der nicht rastierende Hebel in seiner Ausgangsposition, d.h. in der Position, in die er sich nach dem Loslassen bewegt, von der Eingriffsvorrichtung mechanisch entkoppelt. In dieser Position steht die Einkopplungsvorrichtung mit der Eingriffsvorrichtung nicht im Eingriff und die Getriebeposition kann daher unabhängig von der Hebelstellung geändert werden. Erst wenn der Schalt-Wählhebel durch den Fahrer betätigt wird, gelangt der Schalt-Wählhebel über die Einkopplungsvorrichtung mit der Eingriffsvorrichtung in Eingriff und die Getriebeposition kann somit vom Fahrer geändert werden.

Um in dem Zustand, in dem der Schaltwählhebel von der Eingriffsvorrichtung entkoppelt ist, d.h. in dem die Einkopplungsvorrichtung mit der Eingriffsvorrichtung nicht zusammenwirkt, eine Veränderung der Getriebeposition bewirken zu können, kann die Steuereinheit einen zusätzlichen Aktuator zur Betätigung der Übertragungsvorrichtung aufweisen. Dieser Aktuator kann mit der Eingriffsvorrichtung oder unmittelbar mit der Übertragungsvorrichtung zusammenwirken. Der Aktuator kann durch herkömmliche Steuerungssysteme angesteuert werden und beispielsweise dazu dienen, dass die Parkstellung des Schaltwählhebels beim Abschalten des Motors automatisch eingelegt wird.

In einer Ausführungsform der Erfindung umfasst die Einkopplungsvorrichtung an dem Schalthebel, vorzugsweise an dem Schaft des Schalt-Wählhebels, schwenkbar befestigte Eingriffsmittel, die bei Bewegung des Schalt-Wählhebels aus der Ausgangsposition mit der Eingriffsvorrichtung in Eingriff gelangen können. Durch die Ausgestaltung der Einkopplungsvorrichtung, die mit der Eingriffsvorrichtung zusammenwirken sollen, als schwenkbare Mittel, kann insbesondere der Einsatz einer Sicherungsvorrichtung vereinfacht werden. Diese kann bei Betätigung die Eingriffsmittel aus dem Bereich des Eingriffs mit der Eingriffsvorrichtung schwenken. Somit kann eine mechanische Kopplung zwischen der Einkopplungs- und der Eingriffsvorrichtung und damit zwischen dem Schaltwählhebel und der Übertragungsvorrichtung zuverlässig verhindert werden. Dies ist insbesondere in Situationen von Bedeutung, in denen die Getriebeposition ohne Fahrereinwirkung verändert wird.

Bevorzugt wird die Steuereinheit in Verbindung mit einem automatisch betätigbaren Getriebe verwendet.

Gemäß einem weiteren Aspekt wird die Erfindung durch einen Schalt-Wählhebel für die Wahl einer Getriebeposition des Getriebes eines Kraftfahrzeugs gelöst, der die Merkmale des Anspruchs 8 beinhaltet.

Durch diese Ausgestaltung des Schalt-Wählhebels kann sichergestellt werden, dass eine mechanische Verbindung zwischen dem Schalt-Wählhebel und dem Getriebe nur dann vorliegt, wenn der Schaltwählhebel von dem Fahrer bedient und aus der Ausgangsposition bewegt wird.

Merkmale und Details, die im Zusammenhang mit der erfindungsgemäßen Steuereinheit beschrieben werden, gelten ebenso für den erfindungsgemäßen Schalt-Wählhebel und umgekehrt.

Die Erfindung wird im Folgenden anhand der beiliegenden Zeichnungen, die sich auf mögliche Ausführungsbeispiele der Erfindung beziehen, beschrieben. Es zeigen:
Figur 1: eine schematische Seitenansicht einer Ausführungsform einer erfindungsgemäßen Steuereinheit im entkoppelten Zustand;
Figur 2: eine schematische Seitenansicht einer Ausführungsform einer erfindungsgemäßen Steuereinheit im eingekoppelten Zustand;
Figur 3: eine schematische Seitenansicht einer Ausführungsform einer erfindungsgemäßen Steuereinheit mit zusätzlicher Sicherungsvorrichtung.

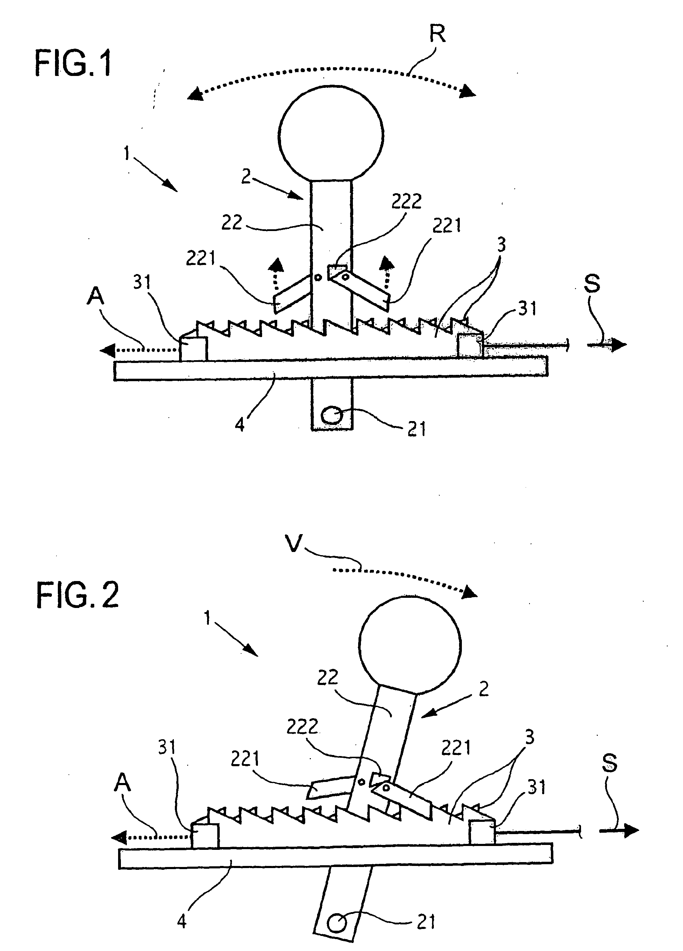

In Figur 1 ist eine Ausführungsform einer erfindungsgemäßen Steuereinheit 1 mit einem erfindungsgemäßen Schalt-Wählhebel 2 dargestellt. Der Schalt-Wählhebel 2 ist um eine Achse 21, die als Drehgelenk ausgestaltet sein kann, schwenkbar. Die Schwenkrichtung des Schalt-Wählhebels 2 ist in Figur 1 schematisch durch den Pfeil R angedeutet. An dem Schaft 22 des Schalt-Wählhebels 2 sind als Einkopplungsvorrichtung Keile 221 schwenkbar befestigt. Die Keile 221 können beliebige Formen aufweisen, besitzen aber vorzugsweise die Form von Stangen, die an einem Ende drehbar an dem Schaft 22 befestigt sind und an dem gegenüberliegenden, freien Ende eine geneigte Fläche aufweisen. Mittels dieser geneigten Fläche können die Keile mit Eingriffsvorrichtungen 3 in Eingriff treten. Die Eingriffsvorrichtungen sind in der dargestellten Ausführungsform zwei Zahnstangen mit gegenläufiger Verzahnung. Vorzugsweise sind, wie dargestellt, an dem Schaft 22 zwei Keile 221 an gegenüberliegenden Seiten des Schafts bezüglich dessen Durchmessers vorgesehen. Diese beiden Keile 221 erstrecken sich in entgegengesetzten Richtungen von dem Schaft. Dadurch kann jeweils einer der beiden Keile 221 ideal mit jeweils einer der gegenläufig verzahnten Zahnstangen 3 in Eingriff gebracht werden. Die Keile 221 sind vorzugsweise in einem Bereich des Schafts 22 angeordnet, der im eingebauten Zustand in dem Fahrzeug oberhalb der Eingriffsvorrichtung 3 liegt.

In dem Bereich der Enden der Keile 221, mit denen diese an dem Schaft 22 befestigt sind, sind Stützen 222 an dem Schaft 22 vorgesehen, die die Drehbewegung der Keile 221 begrenzen. Die Zahnstangen 3, die im wesentlichen parallel zueinander angeordnet sind, sind vorzugsweise an beiden Enden über feste Verbindungsstangen 31 miteinander verbunden. An einem Ende sind die Zahnstangen 3 mit einem Seilzug (durch Pfeil S angedeutet) zum Getriebe des Fahrzeugs (nicht dargestellt) verbunden. An der gegenüberliegenden Seite der Zahnstangen 3 kann ein Seilzug (durch Pfeil A angedeutet) zu einem zusätzlichen Aktuator (nicht dargestellt) vorgesehen sein. Die Zahnstangen 3 werden auf einer Bodenplatte 4, die in der dargestellten Ausführungsform fest mit dem Fahrzeug verbunden ist, geführt. Diese Bodenplatte 4 weist einen Schlitz auf, der zwischen den Zahnstangen 3 verläuft und in dem sich der Schalt-Wählhebel 2 bewegen kann.

Die Funktion des in Figur 1 dargestellten Schalt-Wählhebels 2 soll nunmehr unter Bezugnahme auf die Figur 2 genauer erläutert werden.

Ursprünglich befindet sich der Schalt-Wählhebel 2 in der in Figur 1 dargestellten und im Folgenden als Ausgangsposition bezeichneten Position. In dieser Position befinden sich die Keile 221 nicht in Eingriff mit den Zahnstangen 3. Ohne Betätigung des Fahrers ist der Wählhebel 2 somit vom Seilzug S zu dem Getriebe mechanisch entkoppelt. Wird nun der Schalt-Wählhebel 2 vom Fahrer betätigt und beispielsweise in die in Figur 2 angedeutete Richtung V bewegt, so wird der Hebel 2 um seine Schwenkachse 21 um einen gewissen Winkel gekippt, wodurch einer der Keile 221 mit seinem freien Ende mit der Verzahnung einer der Zahnstangen 3 in Eingriff tritt. Es findet somit in Bewegungsrichtung von der Ausgangsposition weg eine mechanische Kopplung statt. Dadurch kann die Zahnstange 3, die über den Seilzug S mit dem Getriebe verbunden ist, verschoben werden und dadurch durch mechanische Übertragung die Getriebeposition verändert, z.B. kann hochgeschaltet werden. Der andere Keil 221, der auf der gegenüberliegenden Seite des Schaftes 22 angebracht ist, kommt bei dieser Bewegung nicht zum Einsatz. Lässt der Fahrer den Schalt-Wählhebel los, so bewegt sich dieser durch einen Rückstellmechanismus (nicht dargestellt) in die Ausgangsposition zurück. Dieser Rückstellmechanismus kann durch Federn oder Zylinder gebildet werden. Während dieser Rückstellbewegung des Schalt-Wählhebels 2 sorgen die Stützen 222 dafür, dass die Keile 221 nicht mehr mit den Zahnstangen 3 in Eingriff gelangen. Dadurch wird verhindert, dass beim Rückstellen des Schalt-Wählhebels 2 durch die Keile 221 die Verschiebung der Zahnstangen 3 wieder rückgängig gemacht wird.

Befindet sich der Schalt-Wählhebel 2 in der Ausgangsposition, so steht, wie sich aus Figur 1 ergibt, keiner der Keile 221 mit den Zahnstangen 3 im Eingriff. In dieser Position kann daher beispielsweise mittels des zusätzlichen Aktuators die Zahnstangenkonstruktion 3, 31 bewegt und dadurch eine Veränderung der Getriebeposition bewirkt werden. Der Schalthebel 2 wird dabei aufgrund der mechanischen Entkopplung des Schalthebels 2 von den Zahnstangen 3 nicht bewegt.

Wesentlich ist, dass eine mechanische Verbindung zwischen dem Schalthebel 2 und der Eingriffsvorrichtung 3 und damit zwischen dem Schalt-Wählhebel 2 und dem Getriebe nur dann hergestellt wird, wenn der Schalt-Wählhebel 2 aus der Ausgangsposition herausbewegt wird. Beim Zurückbewegen in die Ausgangsposition, das insbesondere durch den Rückstellmechanismus erfolgen kann, besteht keine mechanische Verbindung zwischen dem Schalt-Wählhebel 2 und dem Getriebe.

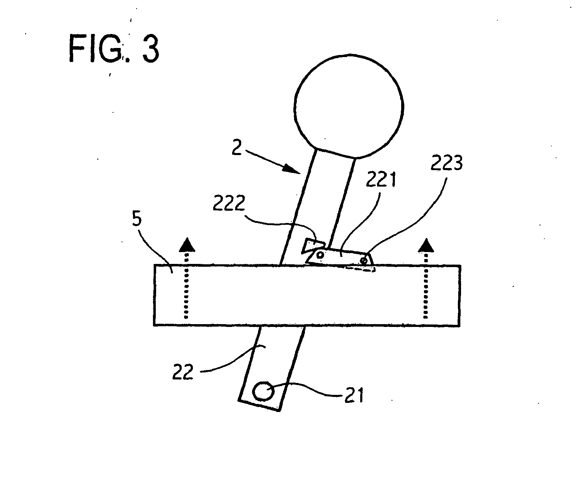

Um sicherzustellen, dass das Betätigen des Schalt-Wählhebels 2 durch den Fahrer nicht mit der Bewegung der Zahnstangen durch den zusätzlichen Aktuator kollidiert, kann erfindungsgemäß eine Sicherungsvorrichtung 5, 223 vorgesehen sein. Diese ist in Figur 3 schematisch dargestellt. Wie sich aus Figur 3 ergibt, sind seitlich neben den Zahnstangen 3 entlang deren gesamter Länge seitliche Führungsschienen 5 vorgesehen. An jedem der Keile 221, die an dem Schaft 22 drehbar gelagert sind, wird im Bereich des freien Endes an der dem Schaft 22 abgewandten Seite des Keiles 221 jeweils ein Stift 223 vorgesehen, der sich von dem Keil 221 seitlich nach außen, d.h. weg von dem Schaft 22 erstreckt. Diese Stifte 223 weisen eine solche Länge auf, dass sich diese bis in den Bereich der neben den Zahnstangen 3 vorgesehenen seitlichen Führungsschienen 5 erstrecken. Im normalen Betrieb der erfindungsgemäßen Steuereinheit 1 befinden sich die seitlichen Führungsschienen in einer Höhe, die unterhalb der Höhe der Verzahnung der Zahnstangen 3 liegt. Greift somit einer der Keile 221 mit seinem freien Ende in die Verzahnung einer der Zahnstangen 3 ein, so stehen die an den Keilen 221 vorgesehenen Stifte 223 an den Seiten der Keile 221 hervor, berühren allerdings die seitlichen Führungsschienen nicht.

Soll nun die Getriebeposition ohne Fahrereingriff, beispielsweise durch den zusätzlichen Aktuator verändert werden, so werden die seitlichen Führungsschienen 5 angehoben, bis diese über die höchsten Punkte der Verzahnung der Zahnstangen 3 hinausragen. Betätigt nun der Fahrer zu diesem Zeitpunkt den Schalt-Wählhebel 2, treten die Stifte 223, die an den Seiten der Keile 221 vorgesehen sind, mit der Oberkante einer der Führungsschienen 5 in Kontakt und gleiten auf dieser entlang. Dadurch wird der Eingriff des Keils 221 mit der Verzahnung der Zahnstange 3 vermieden, und Probleme, die durch einen Eingriff des Fahrers in eine anderweitig veranlasste Änderung der Getriebeposition verursacht werden könnten, können vermieden werden.

Die Führungsschienen 5 können beispielsweise auch dann angehoben werden, wenn der Wählhebel in die Ausgangsposition zurückgeführt wird. Dadurch kann sichergestellt werden, dass der Eingriff zwischen dem Wählhebel und der Eingriffsvorrichtung nicht stattfindet, bis sich der Wählhebel in der entkoppelten Ausgangsposition befindet.

Die dargestellte Ausführungsform stellt lediglich ein Beispiel der Verwirklichung der vorliegenden Erfindung dar. Es ist für den Fachmann offensichtlich, dass die Erfindung durch eine Vielzahl mechanischer Konstruktionen erreicht werden kann.

So können verschiedene mechanische Konstruktionen gewählt werden, um den Kraftschluss zwischen dem Schalt-Wählhebel und dem Getriebe mittels einer Eingriffsvorrichtung bei der Bewegung des Schalt-Wählhebels aus der Ausgangsposition zu verwirklichen. Beispielsweise können die Eingriffsmittel federnd ausgestaltet und verschiebbar gelagert sein. Solche Eingriffsmittel können mit einer geeigneten Eingriffsvorrichtung nach dem Widerhaken-Prinzip arbeiten. Auch bei dieser Ausführungsform wird allerdings sichergestellt werden, dass das Zurückbewegen des Schalt-Wählhebels in die Ausgangsposition die Widerhaken der Eingriffsvorrichtung bzw. des Eingriffsmittels bis zum Erreichen der Ausgangsposition nicht ineinander eingreifen. Weiterhin kann ein Anheben und Absenken der Bodenplatte 4, auf der die Zahnstangen 3 geführt sind, gewählt werden, um den Eingriff der Keile mit der Verzahnung zu ermöglichen bzw. im Fall der automatischen Veränderung der Getriebeposition zu verhindern. Hierbei ist es auch möglich, Einkopplungsvorrichtungen fest mit dem Schalthebel zu verbinden und den Schalt-Wählhebel so zu lagern, dass dieser angehoben bzw. abgesenkt werden kann.

Weiterhin kann bei einer Steuerungsvorrichtung, bei der ein Aktuator, der beispielsweise zur Betätigung der Übertragungsvorrichtung verwendet und durch ein Steuerungssystem angesteuert wird, das Steuerungssystem gleichzeitig zur Betätigung der Sicherungsvorrichtung dienen. Dadurch kann sichergestellt werden, dass in dem Fall, in dem die Getriebeposition ohne Einwirkung des Fahrers verändert wird, der Eingriff der Einkopplungsvorrichtung in die Eingriffsvorrichtung zuverlässig verhindert werden kann.

Unabhängig davon, ob in der erfindungsgemäßen Steuereinheit ein rastierender oder ein nicht rastierender Wählhebel verwendet wird, können Rasten vorgesehen sein, die der Fahrer während der Bewegung des Wählhebels von einer Position zur nächsten überwinden muss. Dieser durch die Rasten erzeugte Widerstand gibt dem Fahrer - neben einer optischen Anzeige - eine (haptische) Rückmeldung, in welche Position er das Getriebe schalten wird. Die Rasten können so vorgesehen sein, dass jede Raste der Grenze zwischen zwei Positionen im Schaltschema, beispielweise zwischen der Park- (P) und der Rückwärtsposition (R), entspricht. Durch unterschiedlich starke Rastierung oder eine völlige Begrenzung kann - auch fahrsituationsabhängig - die direkte Wahl einer bestimmten Getriebeposition aus der augenblicklichen heraus für den Fahrer besonders kenntlich gemacht oder verhindert werden.

Mit der erfindungsgemäßen Steuereinheit kann die Erfüllung der Keylock-Vorschriften erleichtert werden. Diese in den USA gültige Keylock-Vorschrift besagt, dass der Zündschlüssel nur in der Stellung P abgezogen werden darf oder die Stellung P unmittelbar nach dem Abziehen des Schlüssels eingenommen werden muss. In Verbindung mit den heute eingeführten Keyless-Entry-Systemen wird in der Regel kein Schlüssel mehr gesteckt: Es ist ausreichend, wenn eine Chip-Karte mit Transponder mitgeführt wird. Um zusammen mit diesen Systemen die Keylock-Vorschriften zu erfüllen, bleibt nur, das Getriebe beim Ausstellen des Motors oder beim Verlassen des Fahrzeugs in die Position P zu bringen. Das Abziehen eines Zündschlüssels kann bei Keyless-Entry-Systemen nicht verhindert werden. Das Ändern der Getriebeposition bei herkömmlichen Steuereinheiten mit mechanischer Übertragung zum Getriebe führt aber zu den oben erwähnten Nachteilen, z.B. zu einer Gefahr der Verletzung des Fahrers oder Beifahrers. Da in der erfindungsgemäßen Steuereinheit das Getriebe beim Verlassen des Fahrzeugs durch einen Aktuator ohne Bewegung des Wählhebels in die Position P gebracht werden kann, treten die Probleme der herkömmlichen Steuereinheiten nicht auf.

Mit der erfindungsgemäßen Steuereinheit können somit mit zuverlässigen Mitteln auch bei Fahrzeugen, die nur für eine mechanische Übertragung des Fahrerwunsches konstruiert sind, Sonderfunktionen realisiert werden, die bisher nur mit den teueren und problemanfälligen Shift-by-Wire-Systemen möglich waren. Eine dieser Sonderfunktionen ist die Getriebepositionsänderung ohne Fahrereingriff, wie beispielsweise eine Auto-P-Funktion. Eine zusätzliche Aktorik im Wählhebel ist insbesondere bei Verwendung eines nicht rastierenden Wählhebels überflüssig. Weiterhin entfällt bei Verwendung eines nicht rastierenden Wählhebels die Problematik, dass eine während der Sonderfunktion entkoppelte Verbindung wiederhergestellt werden muss. Ferner ist die erfindungsgemäße Steuereinheit gegenüber herkömmlichen Shift-by-Wire-Systemen preiswerter zu realisieren, da die teure Umwandlung mechanischer in elektrische Signale und zurück entfallen kann. Schließlich wird durch die erfindungsgemäße Steuereinheit die Sicherheit und Zuverlässigkeit gegenüber Shift-by-Wire-Systemen erhöht.

## Patentansprüche

1. Steuereinheit (1) für ein Getriebe eines Kraftfahrzeugs, die zumindest einen Schalt-Wählhebel (2), mindestens eine Eingriffsvorrichtung (3) und mindestens eine mechanische Übertragungsvorrichtung (S) zum Getriebe aufweist, wobei die Eingriffsvorrichtung (3) mit der Übertragungsvorrichtung (S) verbunden ist, und zusätzlich zumindest eine Einkopplungsvorrichtung (221, 222) zum wahlweise mechanischen Einkoppeln und Entkoppeln des Schalt-Wählhebels (2) mit der Eingriffsvorrichtung (3) vorgesehen ist,
**dadurch gekennzeichnet, dass**
diese zusätzlich mindestens eine Sicherungsvorrichtung (5, 223) aufweist, die bei der Betätigung des Schalt-Wählhebels (2) einen Eingriff der Einkopplungsvorrichtung (221) mit der Eingriffsvorrichtung (3) verhindern kann.

2. Steuereinheit nach Anspruch 1, **dadurch gekennzeichnet, dass** der Schalt-Wählhebel (2) einen nicht rastierenden Hebel darstellt.

3. Steuereinheit nach Anspruch 2, **dadurch gekennzeichnet, dass** der nicht rastierende Hebel (2) in seiner Ausgangsposition von der Eingriffsvorrichtung (3) mechanisch entkoppelt ist.

4. Steuereinheit nach Anspruch 1, 2 oder 3, **dadurch gekennzeichnet, dass** die Steuereinheit (1) einen zusätzlichen Aktuator zur Betätigung der Übertragungsvorrichtung (S) aufweist.

5. Steuereinheit gemäß einem der vorstehenden Ansprüche, **dadurch gekennzeichnet, dass** die Einkopplungsvorrichtung (221, 222) an dem Schalt-Wählhebel (2) schwenkbar befestigte Eingriffsmittel (221) umfasst, die bei Bewegung des Schalt-Wählhebels (2) aus der Ausgangsposition mit der Eingriffsvorrichtung (3) in Eingriff gelangen.

6. Steuereinheit gemäß Anspruch 5, **dadurch gekennzeichnet, dass** die Sicherungsvorrichtung (5, 223) bei Betätigung die Eingriffsmittel (221) aus dem Bereich des Eingriffs mit der Eingriffsvorrichtung (3) schwenkt.

7. Steuereinheit nach einem der Ansprüche 1 bis 6, **dadurch gekennzeichnet, dass** die Steuereinheit (1) für ein automatisch betätigbares Getriebe verwendet wird.

8. Schalt-Wählhebel (2) für die Wahl einer Getriebeposition des Getriebes eines Kraftfahrzeugs, der mindestens eine Einkopplungsvorrichtung (221, 222) für den Eingriff mit einer Eingriffsvorrichtung (3) aufweist, die mit einer Übertragungsvorrichtung (S) zu einem Getriebe verbunden ist, wobei die Einkopplungsvorrichtung (221, 222) zumindest ein Eingriffsmittel (221) umfasst, das mit dem Schalt-Wählhebel (2) verbunden ist, **dadurch gekennzeichnet, dass** der Eingriff der Einkopplungsvorrichtung (221, 222) mit der Eingriffsvorrichtung (3) nur ermöglicht wird, wenn der Schalt-Wählhebel (2) aus einer Ausgangsposition, in die der Schalt-Wählhebel (2) sich bei Beendigung der Einwirkung des Fahrers begibt, bewegt wird.

## Claims

1. Control unit (1) for the transmission of a motor vehicle, which has at least one gear change / selector lever (2), at least one engagement device (3) and at least one mechanical transfer device (S) to the transmission, the engagement device (3) being connected with the transfer device (S), and additionally at least one coupling device (221, 222) being provided for the selective mechanical coupling and decoupling of the gear change / selector lever (2) with the engagement device (3), **characterised in that** the same additionally has at least one safety device (5, 223) which, upon operation of the gear change / selector lever (2), can prevent engagement of the coupling device (221) with the engagement device (3).

2. Control unit according to claim 1, **characterised in that** the gear change / selector lever (2) is a non-latching lever.

3. Control unit according to claim 2, **characterised in that** the non-latching lever (2), when in its home position, is mechanically decoupled from the engagement device (3).

4. Control unit according to claim 1, 2 or 3, **characterised in that** the control unit (1) has an additional actuator for operating the transfer device (S).

5. Control unit according to one of the preceding claims, **characterised in that** the coupling device (221, 222) includes engagement means (221) which are pivotally secured to the gear change / selector lever (2) and which upon displacement of the gear change / selector lever (2) from its home position come into engagement with the engagement device (3).

6. Control unit according to claim 5, **characterised in that** the safety device (5, 223), when operated, pivots the engagement means (221) out of the region in which it engages with the engagement device (3).

7. Control unit according to one of claims 1 to 6, **characterised in that** the control unit (1) is used for an automatic transmission.

8. Gear change / selector lever (2) for selecting the gear setting of the transmission of a motor vehicle having at least one coupling device (221, 222) for engagement with an engagement device (3) which is connected with a transfer device (S) to the transmission, the coupling device (221, 222) including at least one engagement means (221) connected with the gear change / selector lever (2), **characterised in that** engagement of the coupling device (221, 222) with the engagement device (3) is enabled only when the gear change / selector lever (2) is displaced from its home position to which it proceeds at the end of intervention by the driver.

## Revendications

1. Unité de commande (1) pour une boîte de vitesse d'un véhicule automobile, qui comprend au moins un levier de sélection de vitesse (2), au moins un dispositif de mise en prise (3) et au moins un dispositif de transfert mécanique (S) pour former la boîte de vitesse, le dispositif de mise en prise (3) étant relié au dispositif de transfert (S), et au moins un dispositif de couplage (221, 222) destiné à coupler et découpler mécaniquement au choix le levier de sélection de vitesse (2) avec le dispositif de mise en prise étant prévu en plus,
**caractérisée en ce que**
celle-ci comprend en plus au moins un dispositif de sécurité (5, 23) qui, lors de l'actionnement du levier de sélection de vitesse (2), peut empêcher une mise en prise du dispositif de couplage (221) avec le dispositif de mise en prise (3).

2. Unité de commande selon la revendication 1, **caractérisée en ce que** le levier de sélection de vitesse (2) représente un levier sans encliquetage.

3. Unité de commande selon la revendication 2, **caractérisée en ce que** le levier sans encliquetage (2) est découplé mécaniquement dans sa position de départ du dispositif de mise en prise (3).

4. Unité de commande selon la revendication 1, 2 ou 3, **caractérisée en ce que** l'unité de commande (1) comprend un actionneur additionnel destiné à actionner le dispositif de transfert (S).

5. Unité de commande selon l'une quelconque des revendications précédentes, **caractérisée en ce que** le dispositif de couplage (221, 222) comporte sur le levier de sélection de vitesse (2) des moyens de mise en prise (221) fixés de manière pivotante, qui, lorsque le levier de sélection de vitesse (2) se déplace depuis la position de départ, parviennent en prise avec le dispositif de mise en prise (3).

6. Unité de commande selon la revendication 5, **caractérisée en ce que** le dispositif de sécurité (5, 223), lors de l'actionnement, fait pivoter les moyens de mise en prise (221) depuis la zone de la mise en prise avec le dispositif de mise en prise (3).

7. Unité de commande selon l'une quelconque des revendications 1 à 6, **caractérisée en ce que** l'unité de commande (1) est utilisée pour une boîte de vitesse pouvant être actionnée automatiquement.

8. Levier de sélection de vitesse (2) pour sélectionner une position de boîte de vitesse de la boîte de vitesse d'un véhicule automobile, qui comprend au moins un dispositif de couplage (221, 222) pour la mise en prise avec un dispositif de mise en prise (3), qui est relié à un dispositif de transfert (S) pour former une boîte de vitesse, le dispositif de couplage (221, 222) comportant au moins des moyens de mise en prise (221) qui sont reliés au levier de sélection de vitesse (2), **caractérisé en ce que** la mise en prise du dispositif d'accouplement (221, 222) avec le dispositif de mise en prise (3) n'est possible que lorsque le levier de sélection de vitesse (2) est déplacé depuis une position de départ dans laquelle le levier de sélection de vitesse (2) se dirige une fois l'action du conducteur terminée.
